(19) Europäisches Patentamt
European Patent Office
Office européen des brevets

(11) **EP 2 852 176 B1**

(12) **EUROPEAN PATENT SPECIFICATION**

(45) Date of publication and mention
of the grant of the patent:
**18.05.2016 Bulletin 2016/20**

(51) Int Cl.:
***H04Q 11/00*** *(2006.01)*

(21) Application number: **12879281.9**

(22) Date of filing: **18.06.2012**

(86) International application number:
**PCT/CN2012/077114**

(87) International publication number:
**WO 2013/189017 (27.12.2013 Gazette 2013/52)**

(54) **DYNAMIC BANDWIDTH ALLOCATION METHOD, DEVICE AND SYSTEM**

VERFAHREN, VORRICHTUNG UND SYSTEM FÜR DYNAMISCHE BANDBREITENZUORDNUNG

PROCÉDÉ, DISPOSITIF, ET SYSTÈME POUR UNE ALLOCATION DYNAMIQUE DE LA BANDE PASSANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.03.2015 Bulletin 2015/13**

(73) Proprietors:
• **ZTE Corporation
Shenzhen, Guangdong 518057 (CN)**
• **ZTE Microelectronics Technology Co., Ltd
Shenzhen (CN)**

(72) Inventor: **LEI, Chaofang
Shenzhen
Guangdong 518057 (CN)**

(74) Representative: **Tischner, Oliver et al
Lavoix Munich
Bayerstrasse 83
80335 München (DE)**

(56) References cited:
**EP-A1- 2 466 769        CN-A- 101 399 758
CN-A- 101 753 412        CN-A- 101 753 431
CN-A- 101 997 761        CN-A- 102 195 793
US-A1- 2010 208 747**

**Description**

**TECHNICAL FIELD**

The disclosure relates to a method, device and system of Dynamic Bandwidth Allocation (DBA).

**BACKGROUND**

10-Gigabit passive optical network (XGPON) is a communication protocol of the passive optical network which is defined by ITU-T G.987; compared to a Gigabit-Capable PON (GPON) network, XGPON, as a new fibre wideband access technology, provides a multi-bandwidth performance and is mounted with more Optical Network Units (ONU) while reducing the cost as much as possible, and realize facilitation of the installation, thus XGPON will be applied much more widely in the future.

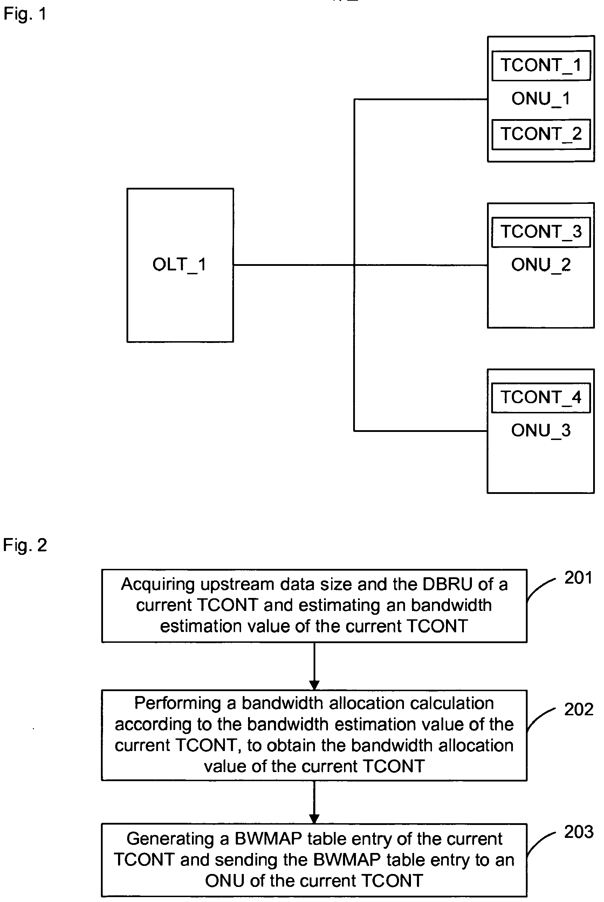

The XGPON system adopts the topological structure of One point to Multi-points (OTM), the same as a GPON system, wherein the Optical Line Terminal (OLT) is a master node connected with a plurality of ONUs which are slave nodes, each ONU including one or more Transmission Containers (TCONT). In the XGPON system shown in Fig. 1, OLT_1 interconnects with ONU_1 including TCONT_1 and TCONT_2, ONU_2 including TCONT_3, ONU_3 including TCONT_4. Each TCONT reports the data size which is buffered by itself or is to be sent to OLT to the OLT by a dynamic bandwidth report (DBRU), and then transmits upstream data according to its bandwidth allocated by the OLT. The frame structure of an upstream frame in the XGPON includes physical layer overhead upstream (PLOU), Start of BURST (SOB) overhead, physical layer OAM (PLOAM), DBRU, XGPON encapsulation header (GEM header), payload, End of BURST(EOB) overhead, FEC CRC overhead and a free frame, etc. It should be noted that the PLOU field can be shared by all of the TCONTs in the same ONU, in another word, the allocation of bandwidth to different TCONTs in the same ONU can be performed simultaneously or respectively.

One critical characteristic of such an OTM network is that as many as 512 ONUs will share one upstream fibre channel, nevertheless, sharing one fibre channel by multiple ONUs is controlled by the OLT. Time division is performed to the bandwidth on the basis of DBRU reported by TCONTs and upstream flow statistics in combination with a service level agreement (SLA), which is the origin of DBA. In the dynamic bandwidth allocation of the XGPON, the OLT determines the starting time and payload of the upstream flow sent by various TCONTs in various ONUs, making ONUs share one upstream in the time domain.

Up to now, there are a large number of DBA algorithms, for example, the Interleaved Polling with Adaptive Cycle Time (IPACT) algorithm, which obtains DBRUs of various TCONTs by polling all of the TCONTs to know the buffering situation of data in various TCONTs, and decides the allocation of bandwidth according to the flow statistics from the OLT. The existing DBA algorithms cannot be adaptive to various overhead and abnormal situations, but often handle such problems by multiplexing the bandwidth, thus leading a waste of precious bandwidth resources.

CN 101753412 A discusses a method and device for dynamic bandwidth processing.

EP 2466769 discusses bandwidth allocation method and optical line terminal.

**SUMMARY**

The disclosure is to provide a method, device and system of DBA, so as to solve the problem that existing DBA algorithms are impossible to be adaptive to various overhead and abnormal situations and thus lead to waste of bandwidth resources.

To this end, the solution of the disclosure is implemented as follows:

the disclosure provides a method of dynamic bandwidth allocation (DBA), as recited in claim 1.

The disclosure further provides a device for DBA, as recited in claim 5.

The disclosure further provides an XG PON system, as recited in claim 9.

The DBA method and device and the system of the disclosure firstly acquire an upstream data size and a dynamic bandwidth report (DBRU) of a current TCONT, estimate a bandwidth estimation value of the current TCONT, then perform a bandwidth allocation calculation according to the bandwidth estimation value of the current TCONT and SLA information configured in advance to obtain a bandwidth allocation value of the current TCONT, thereby being capable of having an adaptive negative feedback bandwidth compensation during the bandwidth estimation, so as to solve the problems and achieve the benefits as follows:

firstly, solving the problem that an OLT cannot know exactly the data size of a TCONT by making an adaptive negative feedback bandwidth compensation for the bandwidth allocation error caused by a flow error in a subsequent DBA period;

secondly, solving the problem that the IPACT algorithm cannot estimate the overhead of the upstream flow exactly by balancing the calculation error of the overhead via the adaptive negative feedback bandwidth compensation;

thirdly, solving the problem that a check error which presents in a link leads to a large deviation in flow statistics by correcting the error in bandwidth allocation with the adaptive negative feedback;

in conclusion, the consideration of the adaptive negative feedback compensation during the bandwidth allocation can lead to accurate bandwidth allocation to different TCONTs in the case of different overhead to obtain stable and accurate bandwidth allocation, so as to allocate the bandwidth accurately, thus avoiding packet loss caused by insufficient allocation of bandwidth and waste caused by excessive allocation of bandwidth, and utilizing sufficiently a good transmission delay and upstream bandwidth, being adaptive to the bandwidth allocation in various abnormal situations, and improving the error correcting capability.

**BRIEF DESCRIPTION OF THE DRAWINGS**

Fig. 1 is a schematic view of the topology structure of an existing XGPON system;

Fig.2 is a flowchart for a DBA method of the disclosure;

Fig.3 is a schematic view of the structure of a DBA device in embodiment 1 of the disclosure; and

Fig.4 is a schematic view of the structure of a XGPON system in embodiment 2 of the disclosure.

**DETAILED DESCRIPTION**

The DBA method of the disclosure can be applied to a XGPON, as shown in Fig. 2, the method including:

Step 201: acquiring the DBRU and upstream data size of a current TCONT and estimating a bandwidth estimation value of the current TCONT;

Step 202: performing a bandwidth allocation calculation according to the bandwidth estimation value of the current TCONT and pre-allocated SLA information, to obtain the bandwidth allocation value of current TCONT.

Here, performing the bandwidth allocation calculation may be performing the bandwidth allocation calculation on the basis of a bandwidth calculation algorithm defined by G.987.3 protocol.

Here, estimating an bandwidth estimation value of current TCONT may specifically be estimating an bandwidth estimation value of current TCONT on the basis of a formula: $act(n) = 2* dbru(n) - dbru(n-1) - pm(n-1) * pm(n-1)/(9720*k)$; wherein $act(n)$ is the bandwidth estimation value of current TCONT in the nth DBA period, $dbru(n)$ is the data buffer value of current TCONT in the nth DBA period, $dbru(n-1)$ is the data buffer value of current TCONT in the (n-1)th DBA period, $pm(n-1)$ is the statistic upstream data size obtained by the OLT in a statistics manner in the (n-1)th DBA period, k is the DBA scheduling period; that is to say, firstly the upstream data size and the DBRU reported by the TCONT are acquired to obtain the bandwidth estimation value of the TCONT by estimation; then the bandwidth value needed to be allocated in current DBA is predicted on the basis of the upstream data size and the change in DBRUs in two adjacent DBA periods; then, the bandwidth allocation value of current TCONT is obtained by estimating error that exists in the former bandwidth allocation to perform a adaptive negative feedback bandwidth compensation on the basis of the upstream flow and the change in DBRU in current DBA period. Here, various variables that are required in the course of DBA calculation, including the bandwidth estimation value, DBRU and the bandwidth allocation value, are stored in real time so as to be used as a reference value for the bandwidth calculation in the next period.
After step 202, the method may further include:

Step 203: generating the bandwidth map (BWMAP) table entry of current TCONT, wherein the BWMAP table entry includes the bandwidth allocation value and the starting time when the upstream data is sent by current TCONT, and sending the BWMAP table entry to the ONU of current TCONT.

In step 203, the BWMAP table entry can also be stored in a local BWMAP table.

Accordingly, the disclosure also provides a DBA device including a bandwidth estimation module and a bandwidth calculation module, wherein the bandwidth estimation module is used for acquiring the upstream data size and the DBRF of current TCONT and estimating the bandwidth estimation value of current TCONT; the bandwidth calculation module is used for performing bandwidth allocation calculation according to pre-configured SLA information and the bandwidth estimation value of current TCONT to obtain the bandwidth allocation value of current TCONT.

Here, the bandwidth calculation module is used for performing the bandwidth allocation calculation on the basis of a bandwidth calculation algorithm defined by G.987 protocol.

Here, the bandwidth estimation module is used for estimating the bandwidth estimation value of current TCONT on the basis of the formula: $act(n) = 2* dbru(n) - dbru(n-1) - pm(n-1) * pm(n-1)/(9720*k)$;

wherein, $act(n)$ is the bandwidth estimation value of current TCONT in the nth DBA period, $dbru(n)$ is the data buffer value of current TCONT in the nth DBA period, $dbru(n-1)$ is the data buffer value of current TCONT in the (n-1)th DBA period, $pm(n-1)$ is the upstream data size obtained by the OLT in a statistics manner in the (n-1)th DBA period, $k$ is the DBA scheduling period.

Here, the DBA device also includes a BWMAP table entry generation module; the bandwidth calculation module is further used for sending the acquired bandwidth allocation value of current TCONT to the BWMAP table entry generation module; the BWMAP table entry generation module is used for generating the BWMAP table entry of current TCONT, wherein the BWMAP table entry includes the bandwidth allocation value and the starting time when the upstream data is sent by current TCONT, and sending the BWMAP table entry to the ONU of current TCONT.

Here, the DBA device further includes a BWMAP table storage module for storing the local BWMAP table; the BWMAP table entry generation module is further used for sending the generated BWMAP table entry to the BWMAP table storage module; the BWMAP table storage module is used for storing the BWMAP table entry in the local BWMAP table.

EXAMPLE 1

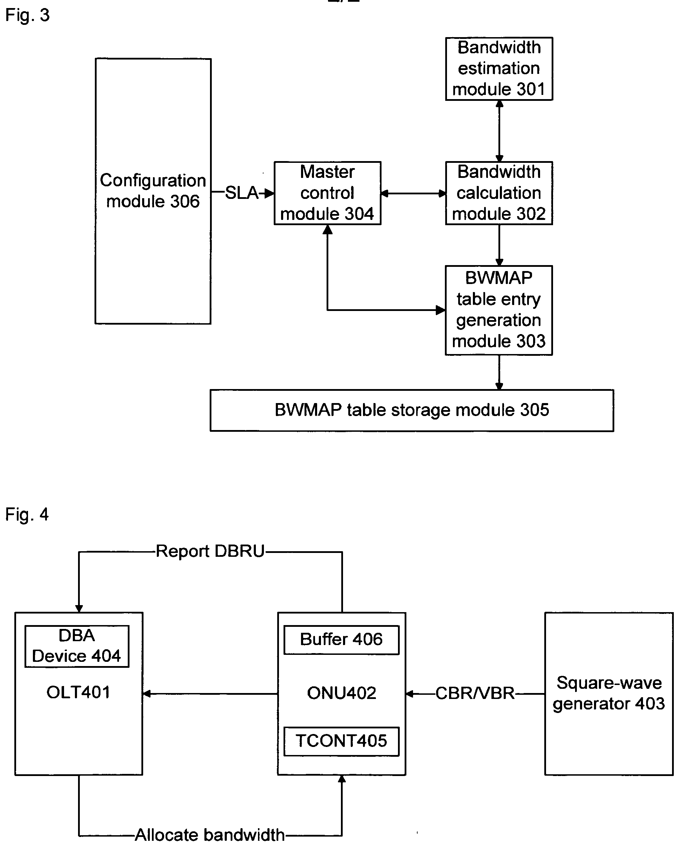

As shown in Fig. 3, the DBA device for the disclosure includes following five modules: a bandwidth estimation module 301, a bandwidth calculation module 302, a BWMAP table entry generation module 303, a master control module 304, a BWMAP table storage module 305 and a configuration module 306.

The master control module 304 is used for control other modules to accomplish DBA;

the configuration module 306 is used for configuring SLA information to send the SLA information to the bandwidth calculation module 302 by the master control module 304, wherein the SLA information includes information of the maximum bandwidth allocable to current TCONT and the priority of the TCONT;

the bandwidth estimation module 301 and the bandwidth calculation module, which both begin to operate under the control of the master control module 304, perform DBA for each TCONT by a polling way and send the bandwidth allocation value of each TCONT to the BWMAP table entry generation module 303.

Specifically, as for current TCONT, the bandwidth estimation module 301 is used for acquiring the buffered data size (i.e. DBRU) reported by current TCONT and the upstream data flow obtained through statistics, estimating the bandwidth estimation value of current TCONT and sending the bandwidth estimation value to the bandwidth calculation module 302. Based on the bandwidth estimation value of current TCONT sent by the bandwidth estimation module 301 and the SLA information configured by the configuration module 306, the bandwidth calculation module 302 performs a bandwidth allocation calculation on the basis of a bandwidth calculation algorithm defined by G.987.3 protocol, obtaining a bandwidth allocation value of current TCONT and sending the bandwidth allocation value to the BWMAP table entry generation module 303;

the BWMAP table entry generation module 303 is used for receiving the bandwidth allocation value of each TCONT which is sent by the bandwidth calculation module 302, allocating bandwidth to each TCONT one by one in the bandwidth of an upstream frame, generating the BWMAP table entry of each TCONT so that one TCONT corresponds to one BWMAP table entry, the BWMAP table entry including the information, such as the bandwidth allocation value and the starting time when the upstream data is sent by each TCONT.

The BWMAP table entry generation module 303 sends the generated BWMAP table entries to the BWMAP table storage module 305 in real time to store them, and then sending the BWMAP table entries to ONUs as a portion of a downstream frame, so as to inform the TCONTs of the ONUs to send upstream data within the time defined by the OLT.

The BWMAP table storage module 305 is used for storing BWMAP table entries.

In practical applications, the moment n*T (nth DBA period) is represented as n, the moment (n-1)*T ((n-1)th DBA period) is represented as n-1, thus the buffered data size is calculated on the basis of formulas (a) and (b) as follow:

$$dbru((n-1)T+t1) \quad = \quad dbru((n-1)T) \quad - \quad \int_{(n-1)T}^{(n-1)T+t1} (V0-V1)dt \qquad (a)$$

$$dbru((n-1)T+t1) \quad = \quad dbru(nT) \quad - \quad \int_{(n-1)T-t1}^{nT} V1dt \qquad (b)$$

Formulas (c) and (d) can be deduced from the formulas (a) and (b):

$$dbru(nT+t1) = dbru(0) \quad + \quad \sum_{m=1}^{m=n}\left(\int_{(m-1)T}^{mT} V1dt - \int_{(m-1)T}^{(m-1)T+t1} V0dt\right) \qquad (c)$$

$$dbru(nT) - dbru((n-1)T) \quad = \quad \left(\int_{(n-1)T}^{nT} V1dt - \int_{(n-1)T}^{(n-1)T+t1} V0dt\right) \qquad (d)$$

where, V0 is the rate of data transmission between OLT and ONU and usually is 2.5Gbps in an XGPON system; V1 is the transmission rate of data input at ONU, dbru((n-1)T+t1) is the data buffer value of the TCONT of the ONU at the moment of (n-1)T+t1; dbru((n-1)T) is the data buffer value of the TCONT of the ONU at the moment of (n-1)T, dbru(nT) is the data buffer value of the TCONT of the ONU at the moment of nT, dbru(0) is the data buffer value of the TCONT of the ONU at the start moment; T is the period value of DBA calculation and usually is a multiple of 125us; t1 is a XPGON allocation bandwidth time slot;

The formulas (e) and (f) as following can be obtained by replacing variables in the formulas (c) and (d) according to the statistic flow value obtained by the OLT and the statistic buffer value of the TCONT of the ONU:

$$dbru\_min(n+1)) \quad = dbru(0) \quad + \quad \sum_{m=0}^{m=n}(act(n) - pm(n)) \qquad (e)$$

$$dbru(n) - dbru(n-1) \quad = \quad act(n-1) - pm(n-1) \qquad (f)$$

where, dbru_min(n) is the minimum data buffer size of the TCONT of the ONU in the nth DBA period; dbru(n) is the data buffer value of the TCONT of the ONU in the nth DBA period; act(n) is the bandwidth estimation value in the nth DBA period which is allocated to the TCONT of the ONU by the DBA device for OLT, and which is equal to the data size sent by a square-wave generator 403 in the nth DBA period; pm(n) is the data size which is obtained by the OLT in a statistics manner in the nth DBA period, which is the payload without containing any overhead.

Because of the existence of the overhead of the upstream flow, it is necessary to substract the overhead value from act(n), otherwise, the case where act(n) is less than pm(n) will occur, thus it can be obtained from formula (e) that, when act(n)<pm(n) and n → ∞, then dbru_min(n+1) → ∞, the TCONT of the ONU will have a buffer overflow and thus packet loss will occur.

It can be deduced from formula (e) that, when act(n-1)<pm(n-1), then dbru(n)>dbru(n-1), which indicates that the decrease of act(n-1) caused by reasons such as overhead will lead dbru(n) to increase. Thus, a negative feedback value "overhead" can be introduced to suppress the decrease of act(n), so as to solve the problem of buffer overflow of the TCONT of the ONU and packet loss; the negative feedback value "overhead" can be obtained on the basis of formulas (g) and (h):

$$overhead(n) \quad = \quad f(dbru(n), pm(n)) \qquad (g)$$

$$act(n) \quad = \quad act(n-1) \quad + \quad overhead(n) \qquad (h)$$

where overhead(n) is the adaptive negative feedback compensation value allocated to the bandwidth in the nth DBA period; act(n) is the bandwidth estimation value which is allocated to the TCONT of ONU by the DBA device for the OLT in the nth DBA period; act(n-1) is the bandwidth estimation value which is allocated to the TCONT of the ONU by the DBA device for OLT in the (n-1)th DBA period and which is equal to the data size sent by the square-wave generator 403 in the nth DBA period; f(dbru(n), pm(n)) is the function of dbru(n) and pm(n), wherein dbru(n) is the data buffer value of the TCONT of the ONU in the nth DBA period and pm(n) is the data size obtained by the OLT in a statistic manner in the nth DBA period, which is the payload without containing any overhead;

it can be seen from the deduction of the formula (a) that, dbru_min(n) increases when act(n-1) decreases, and otherwise dbru_min(n) decreases when act(n-1) increases, thus dbru_min(n) is the best negative feedback variable. It can be seen from the formula (b) that the value of the negative feedback "overhead" satisfies the formula (i) below.

$$\text{overhead}(n) \quad = \quad \text{dbru}(n) \quad - (T\text{-}t1)\text{*pm}(n\text{-}1)/T \qquad\qquad (i)$$

where, overhead(n) is the adaptive negative feedback compensation value allocated to the bandwidth in the nth DBA period; dbru(n) is the data buffer value of the TCONT of the ONU in the nth DBA period; pm(n-1) is the data size obtained by the OLT in a statistics manner in the (n-1)th DBA period, which is the payload without containing any overhead; T is the DBA calculation period value and usually is a multiple of 125us; t1 is the XPGON allocation bandwidth time slot; based on the DBA time division bandwidth, it can be obtained that the value of (T-t1)/T equals to 1-pm(n-1)/9720*k (k is the DBA scheduling period); after 1-pm(n-1)/9720*k is put in formula (i), formulas (j) and (k) below can be deduced from formulas (f) and (h):

$$\text{act}(n) \quad = \quad \text{dbru}(n) - \text{dbru}(n\text{-}1) + \text{pm}(n\text{-}1) + \text{overhead}(n) \qquad\qquad (j)$$

$$\text{overhead}(n) \quad = \text{dbru}(n) - \text{pm}(n\text{-}1) * (1 - \text{pm}(n\text{-}1)/(9720\text{*}k)) \qquad\qquad (k)$$

the combination of formula (j) and (k) can lead to formula (m) below, upon which a bandwidth allocation value in consideration of the adaptive negative feedback compensation value can be obtained.

$$\text{act}(n) = 2* \text{dbru}(n) - \text{dbru}(n\text{-}1) - \text{pm}(n\text{-}1) * \text{pm}(n\text{-}1)/(9720\text{*}k) \quad (m)$$

where, act(n) is the bandwidth estimation value which is allocated to the TCONT of the ONU by the DBA device for the OLT in the nth period; dbru(n) is the data buffer value of the TCONT of the ONU in the nth DBA period; dbru(n-1) is the data buffer value of the TCONT of the ONU in the (n-1)th DBA period; pm(n-1) is the data size which is obtained by the OLT in a statistics manner in the (n-1)th DBA period, and which is the payload without containing any overhead; k is the DBA scheduling period and usually is an integer, and is 8 as a default value.

In practical applications, the bandwidth estimation module 301 estimates the bandwidth of current TCONT in the nth DBA period on the basis of formula (m), so as to obtain the bandwidth estimation value of current TCONT in the nth DBA period. In this way, based on the bandwidth estimation method provided by formula (m), the consideration of the adaptive negative feedback compensation during the bandwidth allocation can lead to a precise bandwidth allocation to different TCONTs in the case of different overhead, thus avoiding the problem of lower flow such as a link error or a statistic error and achieving bandwidth adaptive compensation, implementing precise bandwidth allocation, therefore avoiding packet loss caused by insufficient allocation of bandwidth and bandwidth waste caused by excessive allocation of bandwidth.

EXAMPLE 2

The disclosure further provides an XGPON system, as shown in Fig. 4, the XGPON system includes an OLT 401, an ONU 402 and a square-wave generator 403, the OLT 401 including the above described DBA device 404, the ONU 402 including a TCONT 405 and a buffer 406. The square-wave generator 403 is the input signal source of the ONU 402, wherein the input signal includes a constant bit rate (CBR) and a variable bit rate (VBR); after receiving the data flow input by the square-wave generator 403, the ONU 402 will buffer the data flow in the buffer 406, and reports the data size buffered in the buffer 406 to the OLT 401 with its TCONT 405; after the OLT 401 receives the DBRU reported by the TCONT 405 and the ONU upstream data size obtained by statistics, the DBA device 404 of the OLT 401 obtains the upstream bandwidth allocation value of the TCONT 405 using the above DBA method provided in the disclosure, generates a BWMAP table entry of the TCONT 405 and returns the BWMAP table entry to the TCONT 405, the BWMAP table entry including the bandwidth allocation value and the starting time when the upstream data is sent by the TCONT 405; based on the BWMAP table entry returned by the DBA device and the current buffered data size of the buffer 406, the TCONT 405 of the ONU 402 will determine current upstream data size and send a data flow to the OLT on the basis of the determined data size. Here, the TCONT 405 determines the current upstream data size on the basis of the min (bandwidth allocation value, current buffered data size) principle.

In practical applications, there may be one or more ONUs in a XGPON system, one ONU may contain one or more TCONTs. When the XGPON system contains a plurality of TCONTs, the DBA device is used for polling the TCONTs, performing the DBA method of the disclosure for the TCONTs, so as to obtain bandwidth allocation values of the TCONTs.

**Claims**

1.  A method of dynamic bandwidth allocation, DBA, in a 10-Gigabit passive optical network, XGPON, comprising:

    acquiring an upstream data size and a dynamic bandwidth report, DBRU, of a current transmission container, TCONT, estimating a bandwidth estimation value of the current TCONT (201); and
    performing a bandwidth allocation calculation according to the bandwidth estimation value of the current TCONT and service level agreement, SLA, information configured in advance, to obtain a bandwidth allocation value of the current TCONT (202);
    **characterized in that**,
    the estimating a bandwidth estimation value of the current TCONT is estimating the bandwidth estimation value of the current TCONT on the basis of a formula that is act(n) = 2* dbru(n) - dbru(n-1) -pm(n-1) * pm(n-1)/(9720*k);
    wherein act(n) is a bandwidth estimation value of the current TCONT in a nth DBA period, dbru(n) is a data buffer value of the current TCONT in the nth DBA period, dbru(n-1) is a data buffer value of the current TCONT in a (n-1)th DBA period, pm(n-1) is an upstream data size that is obtained by an Optical Line Terminal, OLT, in a statistics manner in the (n-1)th DBA period, and which is the payload without containing any overhead, k is a DBA scheduling period.

2.  The method of DBA according to claim 1, wherein the performing a bandwidth allocation calculation is performing the bandwidth allocation calculation on the basis of a bandwidth calculation algorithm defined by G.987.3 protocol.

3.  The method of DBA according to any one of claims 1 to 2, further comprising:

    generating a bandwidth map, BWMAP, table entry of the current TCONT which comprises the bandwidth allocation value and a starting time when upstream data is sent by the current TCONT, and sending the BWMAP table entry to an Optical Network Unit, ONU, of the current TCONT (203).

4.  The method of DBA according to claim 3, further comprising:

    storing the BWMAP table entry in a local BWMAP table.

5.  A device for dynamic bandwidth allocation, DBA, in a 10-Gigabit passive optical network, XGPON, comprising a bandwidth estimation module (301) and a bandwidth calculation module (302), wherein
    the bandwidth estimation module(301) is configured to acquire an upstream data size and a dynamic bandwidth report, DBRU, of a current transmission container, TCONT, estimate a bandwidth estimation value of the current TCONT;
    the bandwidth calculation module (302) is configured to perform a bandwidth allocation calculation according to the bandwidth estimation value of the current TCONT and service level agreement, SLA, information configured in advance to obtain a bandwidth allocation value of the current TCONT;
    **characterized in that**,
    the bandwidth estimation module (301) is configured to estimate the bandwidth estimation value of the current TCONT on the basis of a formula that is act(n) = 2* dbru(n) - dbru(n-1) -pm(n-1) * pm(n-1)/(9720*k);
    wherein act(n) is a bandwidth estimation value of the current TCONT in a nth DBA period, dbru(n) is a data buffer value of the current TCONT in the nth DBA period, dbru(n-1) is a data buffer value of the current TCONT in a (n-1)th DBA period, pm(n-1) is an upstream data size obtained by an Optical Line Terminal, OLT, in a statistics manner in the (n-1)th DBA period, and which is the payload without containing any overhead, k is a DBA scheduling period.

6. The device for DBA according to claim 5, wherein the bandwidth calculation module (302) is configured to perform the bandwidth allocation calculation on the basis of a bandwidth calculation algorithm defined by G.987.3 protocol.

7. The device for DBA according to any one of claims 5 to 6, further comprising a BWMAP table entry generation module (303); wherein
the bandwidth calculation module (302) is further configured to send the obtained bandwidth allocation value of the current TCONT to the BWMAP table entry generation module;
the BWMAP table entry generation module (303) is configured to generate a BWMAP table entry of the current TCONT which comprises the bandwidth allocation value and a starting time when upstream data is sent by the current TCONT, and send the BWMAP table entry to an Optical Network Unit, ONU, of the current TCONT.

8. The device for DBA according to claim 7, further comprising a BWMAP table storage module (305) configured to store a local BWMAP table;
the BWMAP table entry generation module (303) is further configured to send the generated BWMAP table entry to the BWMAP table storage module (305);
the BWMAP table storage module (305) is configured to store the BWMAP table entry in the local BWMAP table.

9. An XG PON system, comprising an Optical Line Terminal, OLT (401), and an Optical Network Unit, ONU (402), which are connected with each other, wherein the OLT (401) comprises a dynamic bandwidth allocation, DBA, device (404), the ONU (402) comprises a transmission container, TCONT(405); wherein
the DBA device (404) comprises a bandwidth estimation module (301) and a bandwidth calculation module (302), wherein the bandwidth estimation module (301) is configured to acquire an upstream data size and a dynamic bandwidth report, DBRU, of a current TCONT and estimating a bandwidth estimation value of the current TCONT; and the bandwidth calculation module (302) is configured to perform a bandwidth allocation calculation according to the bandwidth estimation value of the current TCONT and service level agreement, SLA, information configured in advance to obtain a bandwidth allocation value of the current TCONT;
**characterized in that**,
the bandwidth estimation module (301) is configured to estimate the bandwidth estimation value of the current TCONT on the basis of a formula that is $act(n) = 2* dbru(n) - dbru(n-1) - pm(n-1) * pm(n-1)/(9720*k)$;
wherein $act(n)$ is a bandwidth estimation value of the current TCONT in a nth DBA period, $dbru(n)$ is a data buffer value of the current TCONT in the nth DBA period, $dbru(n-1)$ is a data buffer value of the current TCONT in a (n-1)th DBA period, $pm(n-1)$ is an upstream data size obtained by an Optical Line Terminal, OLT, in a statistics manner in the (n-1)th DBA period, and which is the payload without containing any overhead, k is a DBA scheduling period.

10. The XG PON system according to claim 9, wherein the ONU is one or more ONUs, and the ONU contains one or more TCONTs.

11. The XG PON system according to claim 9, wherein when the XG PON system comprises a plurality of TCONTs, the DBA device is configured to poll the plurality of TCONTs, so as to obtain bandwidth allocation values of the plurality of TCONTs.


**Patentansprüche**

1. Verfahren zur dynamischen Bandbreitenzuweisung, DBA, in einem passiven optischen 10-Gigabit-Netzwerk, XG-PON, Folgendes umfassend:

Erfassen einer prozessaufwärtigen Datengröße und einer dynamischen Bandbreitenmeldung, DBRU, eines aktuellen Übertragungsbehälters, TCONT, Schätzen eines Bandbreitenschätzwertes des aktuellen TCONT (201), und
Ausführen einer Bandbreitenzuweisungsberechnung gemäß dem Bandbreitenschätzwert des aktuellen TCONT und gemäß im Vorhinein konfigurierten Informationen der Dienstgütevereinbarung, SLA, um einen Bandbreitenzuweisungswert des aktuellen TCONT zu erzielen (202),
**dadurch gekennzeichnet, dass**
das Schätzen eines Bandbreitenschätzwertes des aktuellen TCONT das Schätzen des Bandbreitenschätzwertes des aktuellen TCONT auf der Grundlage einer Formel ist, die $act(n) = 2 * dbru(n) - dbru(n-1) - pm(n-1) * pm(n-1)/(9720*k)$ lautet,
wobei $act(n)$ ein Bandbreitenschätzwert des aktuellen TCONT in einer n. DBA-Periode ist, $dbru(n)$ ein Datenpufferwert des aktuellen TCONT in der n. DBA-Periode ist, dbru(n-1) ein Datenpufferwert des aktuellen TCONT in einer (n-1). DBA-Periode ist, pm(n-1) eine prozessaufwärtige Datengröße ist, die durch ein Glasfaserendgerät, OLT, statistisch in der (n-1). DBA-Periode erzielt wird und welche die Nutzdaten sind, die keinen Overhead enthalten, k eine DBA-Zeitplanungsperiode ist.

2. Verfahren zur DBA nach Anspruch 1, wobei das Ausführen einer Bandbreitenzuweisungsberechnung das Ausführen der Bandbreitenzuweisungsberechnung auf der Grundlage eines Bandbreitenberechnungsalgorithmus ist, der durch das G.987.3-Protokoll definiert ist.

3. Verfahren zur DBA nach einem der Ansprüche 1 bis 2, ferner Folgendes umfassend:

Erzeugen eines Tabelleneintrags des aktuellen TCONT in ein Bandbreiten-Kennfeld, BWMAP, der den Bandbreitenzuweisungswert und einen Startzeitpunkt umfasst, zu dem prozessaufwärtige Daten durch den aktuellen TCONT gesendet werden, und Senden des BWMAP-Tabelleneintrags an eine Einheit des optischen Netzwerks, ONU, des aktuellen TCONT (203).

4. Verfahren zur DBA nach Anspruch 3, ferner Folgendes umfassend:

Speichern des BWMAP-Tabelleneintrags in eine lokale BWMAP-Tabelle.

5. Vorrichtung zur dynamischen Bandbreitenzuweisung, DBA, in einem passiven optischen 10-Gigabit-Netzwerk, XG-PON, ein Bandbreiten-Schätzmodul (301) und ein Bandbreiten-Berechnungsmodul (302) umfassend, wobei:

das Bandbreiten-Schätzmodul (301) dafür konfiguriert ist, eine prozessaufwärtige Datengröße und eine dynamische Bandbreitenmeldung, DBRU, eines aktuellen Übertragungsbehälters, TCONT, zu erfassen, einen Bandbreitenschätzwert des aktuellen TCONT zu schätzen,
das Bandbreiten-Berechnungsmodul (302) dafür konfiguriert ist, eine Bandbreitenzuweisungsberechnung gemäß dem Bandbreitenschätzwert des aktuellen TCONT und gemäß im Vorhinein konfigurierten Informationen der Dienstgütevereinbarung, SLA, auszuführen, um einen Bandbreitenzuweisungswert des aktuellen TCONT zu erzielen,
**dadurch gekennzeichnet, dass**
das Bandbreiten-Schätzmodul (301) dafür konfiguriert ist, den Bandbreitenschätzwert des aktuellen TCONT auf der Grundlage einer Formel zu schätzen, die $act(n) = 2 * dbru(n) - dbru(n-1) - pm(n-1) * pm(n-1)/(9720*k)$ lautet,
wobei act(n) ein Bandbreitenschätzwert des aktuellen TCONT in einer n. DBA-Periode ist, dbru(n) ein Datenpufferwert des aktuellen TCONT in der n. DBA-Periode ist, dbru(n-1) ein Datenpufferwert des aktuellen TCONT in einer (n-1). DBA-Periode ist, pm(n-1) eine prozessaufwärtige Datengröße ist, die durch ein Glasfaserendgerät, OLT, statistisch in der (n-1). DBA-Periode erzielt wird und welche die Nutzdaten sind, die keinen Overhead enthalten, k eine DBA-Zeitplanungsperiode ist.

6. Vorrichtung zur DBA nach Anspruch 5, wobei das Bandbreiten-Berechnungsmodul (302) dafür konfiguriert ist, die Bandbreitenzuweisungsberechnung auf der Grundlage eines Bandbreitenberechnungsalgorithmus auszuführen, der durch das G.987.3-Protokoll definiert ist.

7. Vorrichtung zur DBA nach einem der Ansprüche 5 bis 6, ferner ein BWMAP-Tabelleneintrag-Erzeugungsmodul (303) umfassend, wobei:

das Bandbreiten-Berechnungsmodul (302) ferner dafür konfiguriert ist, den erzielten Bandbreitenzuweisungswert des aktuellen TCONT an das BWMAP-Tabelleneintrag-Erzeugungsmodul zu senden,
das BWMAP-Tabelleneintrag-Erzeugungsmodul (303) dafür konfiguriert ist, einen BWMAP-Tabelleneintrag des aktuellen TCONT zu erzeugen, der den Bandbreitenzuweisungswert und einen Startzeitpunkt umfasst, zu dem prozessaufwärtige Daten durch den aktuellen TCONT gesendet werden, und den BWMAP-Tabelleneintrag an eine Einheit des optischen Netzwerks, ONU, des aktuellen TCONT zu senden.

8. Vorrichtung zur DBA nach Anspruch 7, ferner ein BWMAP-Tabellen-Speichermodul (305) umfassend, das dafür konfiguriert ist, eine lokale BWMAP-Tabelle zu speichern, wobei:

das BWMAP-Tabelleneintrag-Erzeugungsmodul (303) ferner dafür konfiguriert ist, den erzeugten BWMAP-Tabelleneintrag an das BWMAP-Tabellen-Speichermodul (305) zu senden,
das BWMAP-Tabellen-Speichermodul (305) dafür konfiguriert ist, den BWMAP-Tabelleneintrag in der lokalen BWMAP-Tabelle zu speichern.

9. XG-PON-System, ein Glasfaserendgerät, OLT, (401) und eine Einheit des optischen Netzwerks, ONU, (402) umfassend, die miteinander verbunden sind, wobei das OLT (401) eine Vorrichtung (404) zur dynamischen Bandbreitenzuweisung, DBA, umfasst, die ONU (402) einen Übertragungsbehälter, TCONT, (405) umfasst, wobei:

die DBA-Vorrichtung (404) ein Bandbreiten-Schätzmodul (301) und ein Bandbreiten-Berechnungsmodul (302) umfasst, wobei das Bandbreiten-Schätzmodul (301) dafür konfiguriert ist, eine prozessaufwärtige Datengröße und eine dynamische Bandbreitenmeldung, DBRU, eines aktuellen Übertragungsbehälters, TCONT, zu erfassen und einen Bandbreitenschätzwert des aktuellen TCONT zu schätzen, und das Bandbreiten-Berechnungsmodul (302) dafür konfiguriert ist, eine Bandbreitenzuweisungsberechnung gemäß dem Bandbreitenschätzwert des aktuellen TCONT und gemäß im Vorhinein konfigurierten Informationen der Dienstgütevereinbarung, SLA, auszuführen, um einen Bandbreitenzuweisungswert des aktuellen TCONT zu erzielen,
**dadurch gekennzeichnet, dass**
das Bandbreiten-Schätzmodul (301) dafür konfiguriert ist, den Bandbreitenschätzwert des aktuellen TCONT auf der Grundlage einer Formel zu schätzen, die act(n) = 2 * dbru(n) - dbru(n-1) - pm(n-1) * pm(n-1)/(9720*k) lautet,
wobei act(n) ein Bandbreitenschätzwert des aktuellen TCONT in einer n. DBA-Periode ist, dbru(n) ein Datenpufferwert des aktuellen TCONT in der n. DBA-Periode ist, dbru(n-1) ein Datenpufferwert des aktuellen TCONT in einer (n-1). DBA-Periode ist, pm(n-1) eine prozessaufwärtige Datengröße ist, die durch ein Glasfaserendgerät, OLT, statistisch in der (n-1). DBA-Periode erzielt wird und welche die Nutzdaten sind, die keinen Overhead enthalten, k eine DBA-Zeitplanungsperiode ist.

10. XG-PON-System nach Anspruch 9, wobei die ONU eine oder mehrere ONU ist und die ONU einen oder mehrere TCONT enthält.

11. XG-PON-System nach Anspruch 9, wobei die DBA-Vorrichtung, wenn das XG-PON-System mehrere TCONT umfasst, dafür konfiguriert ist, die mehreren TCONT zu pollen, so dass Bandbreitenzuweisungswerte der mehreren TCONT erzielt werden.

**Revendications**

1. Procédé d'affectation dynamique de bande passante, DBA, dans un réseau optique passif 10 gigabits, XG PON, comprenant les étapes ci-dessous consistant à :

acquérir une taille de données en amont et un rapport de bande passante dynamique, DBRU, d'un conteneur de transmission en cours, TCONT, et estimer une valeur d'estimation de bande passante du conteneur TCONT en cours (201) ; et
mettre en oeuvre un calcul d'affectation de bande passante selon la valeur d'estimation de bande passante du conteneur TCONT en cours et des informations d'accord de niveau de service, SLA, configurées à l'avance, en vue d'obtenir une valeur d'affectation de bande passante du conteneur TCONT en cours (202) ;
**caractérisé en ce que**,
l'étape d'estimation d'une valeur d'estimation de bande passante du conteneur TCONT en cours consiste à estimer la valeur d'estimation de bande passante du conteneur TCONT en cours sur la base d'une formule comme suit : act(n) = 2 * dbru(n) - dbru(n - 1) - pm(n-1)*pm(n-1)/(9720*k);
dans laquelle act(n) correspond à une valeur d'estimation de bande passante du conteneur TCONT en cours au cours d'une n-ième période d'affectation DBA, dbru(n) correspond à une valeur de mémoire tampon de données du conteneur TCONT en cours au cours de la n-ième période d'affectation DBA, dbru(n - 1) correspond à une valeur de mémoire tampon de données du conteneur TCONT en cours au cours d'une (n - 1)ième période d'affectation DBA, pm(n - 1) correspond à une taille de données en amont qui est obtenue par une terminaison de ligne optique, OLT, d'une manière statistique au cours de la (n - 1)ième période d'affectation DBA, et qui correspond à la charge utile ne contenant pas de surdébit, et k correspond à une période de planification d'affectation DBA.

2. Procédé d'affectation DBA selon la revendication 1, dans lequel l'étape de mise en oeuvre d'un calcul d'affectation de bande passante consiste à mettre en oeuvre le calcul d'affectation de bande passante sur la base d'un algorithme de calcul de bande passante défini par le protocole G.987.3.

3. Procédé d'affectation DBA selon l'une quelconque des revendications 1 à 2, comprenant en outre l'étape ci-dessous consistant à :

générer une entrée de table de mise en correspondance de bandes passantes, BWMAP, du conteneur TCONT en cours, qui comprend la valeur d'affectation de bande passante et un instant de début où des données en amont sont envoyées par le conteneur TCONT en cours, et envoyer l'entrée de table de mise en correspondance BWMAP à une unité optique de réseau, ONU, du conteneur TCONT en cours (203).

4. Procédé d'affectation DBA selon la revendication 3, comprenant en outre l'étape ci-dessous consistant à :

stocker l'entrée de table de mise en correspondance BWMAP dans une table de mise en correspondance BWMAP locale.

5. Dispositif d'affectation dynamique de bande passante, DBA, dans un réseau optique passif 10 gigabit, XG PON, comprenant un module d'estimation de bande passante (301) et un module de calcul de bande passante (302), dans lequel :

le module d'estimation de bande passante (301) est configuré de manière à acquérir une taille de données en amont et un rapport de bande passante dynamique, DBRU, d'un conteneur de transmission en cours, TCONT, et à estimer une valeur d'estimation de bande passante du conteneur TCONT en cours ; et
le module de calcul de bande passante (302) est configuré de manière à mettre en oeuvre un calcul d'affectation de bande passante selon la valeur d'estimation de bande passante du conteneur TCONT en cours et des informations d'accord de niveau de service, SLA, configurées à l'avance, en vue d'obtenir une valeur d'affectation de bande passante du conteneur TCONT en cours ;
**caractérisé en ce que**,
le module d'estimation de bande passante (301) est configuré de manière à estimer la valeur d'estimation de bande passante du conteneur TCONT en cours sur la base d'une formule comme suit : $act(n) = 2 * dbru(n) - dbru(n - 1) - pm(n - 1) * pm(n - 1) / (9\,720 * k)$ ;
dans laquelle $act(n)$ correspond à une valeur d'estimation de bande passante du conteneur TCONT en cours au cours d'une n-ième période d'affectation DBA, $dbru(n)$ correspond à une valeur de mémoire tampon de données du conteneur TCONT en cours au cours de la n-ième période d'affectation DBA, $dbru(n - 1)$ correspond à une valeur de mémoire tampon de données du conteneur TCONT en cours au cours d'une $(n - 1)$ième période d'affectation DBA, $pm(n - 1)$ correspond à une taille de données en amont qui est obtenue par une terminaison de ligne optique, OLT, d'une manière statistique au cours de la $(n - 1)$ième période d'affectation DBA, et qui correspond à la charge utile ne contenant pas de surdébit, et $k$ correspond à une période de planification d'affectation DBA.

6. Dispositif d'affectation DBA selon la revendication 5, dans lequel le module de calcul de bande passante (302) est configuré de manière à mettre en oeuvre le calcul d'affectation de bande passante sur la base d'un algorithme de calcul de bande passante défini par le protocole G.987.3.

7. Dispositif d'affectation DBA selon l'une quelconque des revendications 5 à 6, comprenant en outre un module de génération d'entrée de table de mise en correspondance BWMAP (303) ; dans lequel
le module de calcul de bande passante (302) est en outre configuré de manière à envoyer la valeur d'affectation de bande passante obtenue du conteneur TCONT en cours au module de génération d'entrée de table de mise en correspondance BWMAP ;
le module de génération d'entrée de table de mise en correspondance BWMAP (303) est configuré de manière à générer une entrée de table de mise en correspondance BWMAP du conteneur TCONT en cours qui comprend la valeur d'affectation de bande passante et un instant de début où des données en amont sont envoyées par le conteneur TCONT en cours, et à envoyer l'entrée de table de mise en correspondance BWMAP à une unité optique de réseau, ONU, du conteneur TCONT en cours.

8. Dispositif d'affectation DBA selon la revendication 7, comprenant en outre un module de stockage de table de mise en correspondance BWMAP (305) configuré de manière à stocker une table de mise en correspondance BWMAP locale ;

dans lequel le module de génération d'entrée de table de mise en correspondance BWMAP (303) est en outre configuré de manière à envoyer l'entrée de table de mise en correspondance BWMAP générée au module de stockage de table de mise en correspondance BWMAP (305) ;

le module de stockage de table de mise en correspondance BWMAP (305) est configuré de manière à stocker l'entrée de table de mise en correspondance BWMAP dans la table de mise en correspondance BWMAP locale.

9. Système de réseau XG PON, comprenant une terminaison de ligne optique, OLT, (401), et une unité optique de réseau, ONU, (402), lesquelles sont mutuellement connectées, dans lequel la terminaison OLT (401) comporte un dispositif d'affectation dynamique de bande passante, DBA, (404), et l'unité ONU (402) comporte un conteneur de transmission, TCONT (405) ; dans lequel

le dispositif d'affectation DBA (404) comporte un module d'estimation de bande passante (301) et un module de calcul de bande passante (302), dans lequel le module d'estimation de bande passante (301) est configuré de manière à acquérir une taille de données en amont et un rapport de bande passante dynamique, DBRU, d'un conteneur de transmission en cours, TCONT, et à estimer une valeur d'estimation de bande passante du conteneur TCONT en cours ; et le module de calcul de bande passante (302) est configuré de manière à mettre en oeuvre un calcul d'affectation de bande passante selon la valeur d'estimation de bande passante du conteneur TCONT en cours et des informations d'accord de niveau de service, SLA, configurées à l'avance, en vue d'obtenir une valeur d'affectation de bande passante du conteneur TCONT en cours ;

**caractérisé en ce que**,

le module d'estimation de bande passante (301) est configuré de manière à estimer la valeur d'estimation de bande passante du conteneur TCONT en cours sur la base d'une formule comme suit : $act(n) = 2 * dbru(n) - dbru(n - 1) - pm(n - 1) * pm(n - 1) / (9\,720 * k)$ ;

dans laquelle $act(n)$ correspond à une valeur d'estimation de bande passante du conteneur TCONT en cours au cours d'une n-ième période d'affectation DBA, $dbru(n)$ correspond à une valeur de mémoire tampon de données du conteneur TCONT en cours au cours de la n-ième période d'affectation DBA, $dbru(n - 1)$ correspond à une valeur de mémoire tampon de données du conteneur TCONT en cours au cours d'une $(n - 1)$ième période d'affectation DBA, $pm(n - 1)$ correspond à une taille de données en amont qui est obtenue par une terminaison de ligne optique, OLT, d'une manière statistique au cours de la $(n - 1)$ième période d'affectation DBA, et qui correspond à la charge utile ne contenant pas de surdébit, et $k$ correspond à une période de planification d'affectation DBA.

10. Système de réseau XG PON selon la revendication 9, dans lequel l'unité ONU correspond à une ou plusieurs unités ONU et l'unité ONU contient un ou plusieurs conteneurs TCONT.

11. Système de réseau XG PON selon la revendication 9, dans lequel, lorsque le système de réseau XG PON comporte une pluralité de conteneurs TCONT, le dispositif d'affectation DBA est configuré de manière à interroger la pluralité de conteneurs TCONT, de manière à obtenir des valeurs d'affectation de bande passante de la pluralité de conteneurs TCONT.

Fig. 1

Fig. 2

| | |
|---|---|
| Acquiring upstream data size and the DBRU of a current TCONT and estimating an bandwidth estimation value of the current TCONT | 201 |
| Performing a bandwidth allocation calculation according to the bandwidth estimation value of the current TCONT, to obtain the bandwidth allocation value of the current TCONT | 202 |
| Generating a BWMAP table entry of the current TCONT and sending the BWMAP table entry to an ONU of the current TCONT | 203 |

Fig. 3

Fig. 4

**EP 2 852 176 B1**

**REFERENCES CITED IN THE DESCRIPTION**

**Patent documents cited in the description**

- CN 101753412 A

- EP 2466769 A